# EUROPEAN PATENT SPECIFICATION

(11) **EP 3 020 744 B1**
(45) Date of publication and mention of the grant of the patent: **30.12.2020**
(21) Application number: 14193172.5
(22) Date of filing: 14.11.2014
(51) Int. Cl.: C08G 18/16, C08G 18/20, C08G 18/40, C08G 18/76, C08G 18/36, C08G 18/48, C08K 3/26, C09J 175/04, C08G 18/42

(54) **Two-component polyurethane adhesive composition**
Zweikomponenten-Polyurethanklebstoffzusammensetzung
Composition d'adhésif en polyuréthane à deux composants

(43) Date of publication of application: 18.05.2016
(73) Proprietor: 3M Innovative Properties Company, Saint Paul, MN 55133-3427 (US)
(72) Inventor: Delajon, Christophe, 67500 Haguenau (FR); Kiester, Mathieu, 67500 Haguenau (FR); Schmitt, Eric, 67500 Haguenau (FR)
(74) Representative: Gabriel, Kiroubagaranne

(56) References cited:
- EP-A1- 2 597 107
- WO-A1-95/08579
- JP-A- 2006 282 922
- US-A1- 2012 301 729
- DATABASE WPI Week 201302 Thomson Scientific, London, GB; AN 2012-R29156 XP002739834, & JP 2012 251053 A (TOYOTA JIDOSHA KK) 20 December 2012 (2012-12-20)

## Description

### Technical Field

The present disclosure relates generally to polyurethane adhesive compositions, more specifically to the field of two-component curable and cured polyurethane adhesive compositions. The adhesive compositions of the present disclosure are particularly suitable for the manufacturing of sandwich panels. The present disclosure also relates to a method of manufacturing a sandwich panel and to methods of using such polyurethane adhesive compositions.

### Background

Sandwich panels are well known in the industry, especially in the construction and transportation industry. Sandwich panels are laminated structures composed of alternating objects of different materials. Typically, sandwich panels comprise a core structure trapped between external structural sheets. Due to the versatility of materials used in the manufacturing of sandwich panels, efficient bonding solution is required.

In that context, two component epoxy adhesives have been widely used as bonding solution for manufacturing sandwich panels. However, due to its reactivity epoxy adhesives generally require high curing temperature and/or long pressing time, which are undesired in industrial production processes. Alternative bonding solutions using polyurethane adhesives, in particular two-component urethane adhesives have been used and are known to offer the advantage of an extended pot life at ambient temperature at the detriment of the curing time. In order to promote curing, these systems typically require a catalyst, typically an organometallic compound, such as e.g. catalysts based on organotin compounds or organobismuth compounds; or an amine or amine-like compound. Unfortunately however, the faster curing or conversion permitted by these catalysts is generally accompanied with shortening of the pot life.

Industrial processes of manufacturing sandwich panels typically require adhesive compositions providing long open time and minimal press time, while providing acceptable curing time. Polyurethane-based adhesives claimed to provide both long open times and rapid "on demand" curing are described in WO 95/08579 A1 (Schoener et al.) and in US 2012/0301729 A1 (Schmider et al.). The disclosed systems do however require using complex catalytic and/or curing systems, which in turn will lead to cost-inefficient and complex production processes. Some systems also make use of recognized harmful materials such as tin- or bismuth-based compounds, requiring stringent CLP labeling. JP 2012 251053 discloses a urethane resin adhesive composition which is claimed to have high strength, high elongation and excellent adhesion.

Without contesting the technical advantages associated with the adhesive solutions known in the art, there is still a need for a stable and cost-effective adhesive composition providing long open time and low toxicity. Other advantages of the adhesive compositions and methods of the disclosure will be apparent from the following description.

### Summary

According to one aspect, the present disclosure relates to a curable two-component polyurethane adhesive composition comprising:
a) a first component C1 comprising at least one polyol;
b) a second component C2 comprising at least one isocyanate;
c) a polyurethane catalytic system comprising a first bicyclic amine and a second bicyclic amine; and
d) optionally, a particulate filler material;
wherein the total amount of polyurethane catalytic system in component C1 or in component C2 is comprised between 0.2 wt.% and 1.0 wt.%, based on the total weight of component C1 or component C2, wherein the total amount of particulate filler material in component C1 or in component C2 is above 40 wt%, based on the total weight of component C1 or component C2, wherein the particulate filler material is selected from the group consisting of calcium carbonates having an average particle size of above 5 µm when measured by gravitational technique according to ISO 13371-3:2001, and wherein the curable two-component polyurethane adhesive composition is free of polyurethane metal catalysts.

In another aspect, the present disclosure is directed to a method of manufacturing a sandwich panel comprising at least a core layer, at least a first structural panel and at least a second structural panel, wherein the method comprises the step of using a curable composition as described above.

According to still another aspect, the present disclosure relates to a sandwich panel comprising at least a core layer, at least a first structural panel and at least a second structural panel, and which further comprises a cured composition bonding the first structural panel to one side of the core layer and the second structural panel to the other side if the core layer, wherein the cured composition is obtained by mixing the first component C1, the second component C2 and the polyurethane catalytic system of a curable composition as described above, followed by heating the curable composition above the activating temperature of the polyurethane catalytic system.

In still another aspect, the present disclosure is directed to the use of a curable composition as described above for manufacturing a sandwich panel comprising at least a core layer, at least a first structural panel and at least a second structural panel.

### Detailed description

According to a first aspect, the present disclosure relates to a curable two-component polyurethane adhesive composition comprising:
a) a first component C1 comprising at least one polyol;
b) a second component C2 comprising at least one isocyanate;
c) a polyurethane catalytic system comprising a first bicyclic amine and a second bicyclic amine; and
d) optionally, a particulate filler material;
wherein the total amount of polyurethane catalytic system in component C1 or in component C2 is comprised between 0.2 wt.% and 1.0 wt.%, based on the total weight of component C1 or component C2, wherein the total amount of particulate filler material in component C1 or in component C2 is above 40 wt%, based on the total weight of component C1 or component C2, wherein the particulate filler material is selected from the group consisting of calcium carbonates having an average particle size of above 5 µm when measured by gravitational technique according to ISO 13371-3:2001, and wherein the curable two-component polyurethane adhesive composition is free of polyurethane metal catalysts.

In the context of the present disclosure, it has been surprisingly found that a curable two-component polyurethane adhesive composition as described above, in particular a composition comprising a polyurethane catalytic system comprising a first bicyclic amine and a second bicyclic amine, provides excellent characteristics and performance as to open time. The polyurethane adhesive compositions according to the present disclosure may reach an open time exceeding 20 minutes, while maintaining excellent curing time characteristics, in particular when used for manufacturing sandwich panels. The open time is a well known parameter in the field of sandwich panel manufacturing, and is meant to refer to the maximum time after adhesive application during which repositioning is still possible. In the context of the present disclosure, the open time is measured according to the test method described in the experimental section.

In addition, the curable two-component polyurethane adhesive compositions as described herein provide surprisingly good shelf life under storage, as they are typically provided with a shelf life of more than 9 months.

The polyurethane adhesive compositions according to the present disclosure are further characterized by excellent characteristics and performance in terms of press time. Because the polyurethane catalytic system used herein does not comprise any organometallic compounds, such as e.g. organotin compounds or organobismuth compounds, the adhesive compositions of the present disclosure are characterized by low toxicity.

As such, the polyurethane adhesive compositions sensitive adhesives according to the present disclosure are particularly suited for the manufacture of sandwich panels, as they provide a stable, cost-effective, convenient and versatile bonding solution for the manufacture of a broad variety of sandwich panels involving various core layer and structural sheet materials.

The first component C1 for use herein comprises a polyol. Any polyol commonly known in the art may be used in the context of the present disclosure. As such, the polyol for use herein is not particularly limited. Suitable polyols for use herein will be easily identified by those skilled in the art, in the light of the present description. Exemplary polyols for use herein are described in US 2012/0301729 A1 (Schmider et al.), the content of which is herewith fully integrated by reference. Exemplary polyols include, but are not limited to, aliphatic polyols, aromatic polyols, and any combinations thereof. Polyols for use herein may be diols, triols, or tetraols. Suitable aromatic polyols include those comprising a bisphenol-A or bisphenol-F moiety.

According to a particular aspect, the polyol for use herein is selected from the group consisting of polyether polyols, polyester polyols, and any combinations or mixtures thereof. According to an advantageous aspect of the curable polyurethane adhesive composition according, the first component C1 comprises a polyether polyol and a polyester polyol.

In a typical aspect, the total amount of polyol(s) in component C1 is of less than 60 wt%, less than 50 wt%, less than 40 wt%, or even less than 30 wt%, based on the total weight of component C1. According to an exemplary aspect, the total amount of polyols in component C1 is comprised between 10 wt% and 60 wt%, between 15 wt% and 50 wt%, between 15 wt% and 45 wt%, between 20 wt% and 40 wt%, between 20 wt% and 35 wt%, or even between 20 wt% and 30 wt%, based on the total weight of component C1.

The second component C2 for use herein comprises an isocyanate. Any isocyanate commonly known in the art may be used in the context of the present disclosure. As such, the isocyanate for use herein is not particularly limited. Suitable isocyanates for use herein will be easily identified by those skilled in the art, in the light of the present description. Exemplary isocyanates for use herein are described in US 2012/0301729 A1 (Schmider et al.), the content of which is herewith fully integrated by reference. Exemplary isocyanates include, but are not limited to, aliphatic isocyanates, aromatic isocyanates, and any combinations thereof. Suitable aromatic isocyanates include diphenylmethane diisocyanate, toluene diisocyanate, and any polymers, derivatives or mixtures thereof. Suitable aliphatic isocyanates include methylenedicyclohexane diisocyanate, isophorone diisocyanate, hexamethylene diisocyanate, and any polymers, derivatives or mixtures thereof.

In a particular aspect, the isocyanate for use in the second component C2 may be present at least partially in a polymeric form, or in the form of a combination of isocyanates and polyisocyanates.

The total amount of isocyanate in component C2 is typically selected such that the ratio of the isocyanate groups in component C2 to the groups reactive to isocyanate groups in component C1 is in the range comprised between 0.8 and 1.2, between 0.9 and 1.1, or even about 1.

The curable two-component polyurethane adhesive composition according to the present disclosure further comprises a polyurethane catalytic system comprising a first bicyclic amine and a second bicyclic amine.

The polyurethane catalytic system for use herein may be comprised in component C1 and/or in component C2. In an advantageous aspect of the curable composition according to the present disclosure, the first bicyclic amine and the second bicyclic amine are both comprised in the first component C1 or in the second component C2. In a preferred aspect of the present disclosure, the first bicyclic amine and the second bicyclic amine are both comprised in the first component C1. In an alternative aspect, the first bicyclic amine is comprised in the first component C1 and the second bicyclic amine is comprised in the second component C2.

Any bicyclic amine commonly known in the art may be used in the context of the present disclosure as long as the first bicyclic amine and a second bicyclic amine are structurally different. As such, the bicyclic amines for use herein are not particularly limited. Suitable bicyclic amines for use herein will be easily identified by those skilled in the art, in the light of the present description.

According to an advantageous aspect, at least one of the first bicyclic amine or the second bicyclic amine is a bicyclic tertiary amine. In a preferred aspect, both of the first bicyclic tertiary amine and the second bicyclic tertiary amine are bicyclic tertiary amines.

In a still preferred aspect of the polyurethane catalytic system for use herein, at least one of the first bicyclic amine or the second bicyclic amine is selected from the group consisting of aza bicyclic amines, aza bicyclic tertiary amines, diaza bicyclic amines and diaza bicyclic tertiary amines. More preferably, both of the first bicyclic amine and the second bicyclic amine are selected from the group consisting of aza bicyclic amines, aza bicyclic tertiary amines, diaza bicyclic amines and diaza bicyclic tertiary amines.

Suitable bicyclic amines for use herein are preferably selected from the group consisting of 1-azabicyclo[2.2.2]octane; 8-azabicyclo[3.2.1]octane; N-methyl-8-azabicyclo[3.2.1]octane; 1,4-diazabicyclo[2.2.2]octane; 1,8-diazabicyclo[5.4.0]undec-7-ene; 1,5-diazabicyclo[5.4.0]undec-5-ene; 1,5-diazabicyclo[4.3.0]non-5-ene; 3,8-diazabicyclo[3.2. 1]octane; 1,4-diazabicyclo[3.2.2]nonane; 3,9-diazabicyclo[3.3.1]non-1-ene; 7,9-diazabicyclo[4.2.2]decane; 1,4-diazabicyclo-[4.4.0]decane; and any combinations thereof.

According to an advantageous aspect, at least one of the first bicyclic amine or the second bicyclic amine is a diaza bicyclic tertiary amine. Preferably, both of the first bicyclic amine and the second bicyclic amine are diaza bicyclic tertiary amines.

In an advantageous aspect still, the diaza bicyclic tertiary amine for use herein is selected from the group consisting of 1,4-diazabicyclo[2.2.2]octane; 1,8-diazabicyclo[5.4.0]undec-7-ene; 1,5-diazabicyclo[5.4.0]undec-5-ene; 1,5-diazabicyclo[4.3.0]non-5-ene; 1,4-diazabicyclo[3.2.2]nonane; 1,4-diazabicyclo-[4.4.0]decane; and any combinations or mixtures thereof.

According to a particularly preferred aspect, the diaza bicyclic tertiary amine for use herein is selected from the group consisting of 1,4-diazabicyclo[2.2.2]octane; 1,8-diazabicyclo[5.4.0]undecene-7; and any combinations or mixtures thereof.

According to a particularly preferred aspect still, the first bicyclic amine is selected to be 1,8-diazabicyclo[5.4.0]undec-7-ene and the second bicyclic amine is selected to be 1,4-diazabicyclo[2.2.2]octane. In an alternatively preferred aspect, the first bicyclic amine is selected to be 1,4-diazabicyclo[2.2.2]octane and the second bicyclic amine is selected to be 1,8-diazabicyclo[5.4.0]undec-7-ene.

In some aspects of the curable two-component polyurethane adhesive composition according to the present disclosure, the polyurethane catalytic system consists of the first bicyclic amine and the second bicyclic amine as described above.

The polyurethane catalytic system may be present in the polyurethane adhesive composition according to the present disclosure in any suitable amount. In a typical aspect though, the total amount of polyurethane catalytic system is of less than 3.0 wt%, less than 2.5 wt%, less than 2.0 wt%, less than 1.5 wt%, or even less than 1.0 wt%, based on the total weight of the curable composition. According to an exemplary aspect, the total amount of polyurethane catalytic system is comprised between 0.05 wt% and 3 wt%, between 0.15 wt% and 2.0 wt%, between 0.3 wt% and 1.5 wt%, between 0.45 wt% and 1.5 wt%, between 0.7 wt% and 1.5 wt%, or even between 0.85 wt% and 1.5 wt%, based on the total weight of the curable composition.

In a typical aspect of the curable composition, the total amount of polyurethane catalytic system in component C1 or in component C2 is of less than 2.0 wt%, less than 1.5 wt%, or even less than 1.0 wt%, based on the total weight of component C1 or component C2 as applicable. Typically still, the total amount of polyurethane catalytic system in component C1 or in component C2 is above 0.1 wt%, above 0.2 wt%, above 0.4 wt%, above 0.5 wt%, above 0.6 wt%, based on the total weight of component C1 or component C2, as applicable.

According to the disclosure, the total amount of polyurethane catalytic system present in component C1 or in component C2 is comprised between 0.2 wt% and 1.0 wt%, based on the total weight of component C1 or component C2, as applicable.

According to an advantageous aspect, the total amount of polyurethane catalytic system present in component C1 or in component C2 is comprised between 0.3 wt% and 1.0 wt%, between 0.5 wt% and 1.0 wt%, or even between 0.6 wt% and 1.0 wt%, based on the total weight of component C1 or component C2, as applicable.

In an advantageous aspect of the curable composition according to the present disclosure, the polyurethane catalytic system is comprised in component C1.

According to an exemplary aspect, the weight ratio of the first bicyclic amine to the second bicyclic amine present in the curable composition ranges from 2.5:1 to 1:2.5, from 2:1 to 1:2, from 1.5:1 to 1:1.5, from 1.2:1 to 1:1.2, from 1.15:1 to 1:1.15, or even from 1.1:1 to 1:1.1.

The curable two-component polyurethane adhesive composition of the present disclosure may comprise any additional ingredients commonly known in the art. Exemplary ingredients include, but are not limited to, inorganic or organic fillers, pigments, dispersing agents, rheology modifiers, silica, plasticizers, fibers, solvents, foaming agents, catalysts which accelerate the reaction of the isocyanate groups, drying agents, coupling agents, adhesion promoters, heat stabilizers, UV stabilizers, light stabilizers, flame retardants, biocides, defoaming agents, wetting agents, surfactants, and any combinations or mixtures thereof.

According to an advantageous aspect, the curable two-component polyurethane adhesive composition of the present disclosure further comprises a filler material, in particular a particulate filler material.

In a typical aspect, this filler material is comprised in component C1 or in component C2. According to an exemplary aspect, the total amount of particulate filler material in component C1 or in component C2 is above 40 wt%, based on the total weight of component C1 or component C2, as appropriate.

In a typical aspect, the total amount of particulate filler material in component C1 or in component C2 is above 45 wt%, above 50 wt%, above 55 wt%, above 60 wt%, or even above 65 wt%, based on the total weight of component C1 or component C2, as appropriate. Advantageously, the total amount of particulate filler material in component C1 or in component C2 is comprised between 40 wt% and 85 wt%, between 45 wt% and 85 wt%, between 50 wt% and 80 wt%, between 55 wt% and 80 wt%, between 60 wt% and 75 wt%, or even between 65 wt% and 75 wt%, based on the total weight of component C1 or component C2.

According to a particular aspect of the present disclosure, the particulate filler material is fully comprised in component C1.

According to the disclosure, the particulate filler material is selected from the group consisting of ground or precipitate calcium carbonates, optionally coated with e.g. fatty acids or fatty esters; carbon black; fumed silica; silica; kaolin; PVC; aluminum oxide; fibers; and any combinations or mixtures thereof.

Preferably, the particulate filler material is selected from the group consisting calcium carbonates, in particular ground calcium carbonates treated with fatty acids or fatty esters such as e.g. calcium stearate.

According to the disclosure, the particulate filler material has an average particle size of above 5 µm, above 6 µm, above 8 µm, or even above 10 µm. Preferably, the particulate filler material has an average particle size comprised between 5 µm and 8 µm. The average particle size is typically measured by gravitational technique according to test method ISO 13317-3:2001.

According to an advantageous aspect of the present disclosure, the curable composition is substantially free of polyurethane metal catalysts, in particular substantially free of poyurethane catalysts based on organotin compounds, organobismuth compounds, organozinc compounds or organozirconium compounds. In the context of the present disclosure, the term "substantially free" is meant to designate a quantity of the relevant compound which is typically less than 1wt%, less than 0.5wt%, or even less than 0.1wt%.

In still another advantageous aspect, the curable composition according to the present disclosure is a non-foamable, or a non-foamed composition.

The curable two-component polyurethane adhesive composition of the present disclosure may be prepared according to processes which are known to those skilled in the art. Advantageously, the various ingredients of the curable composition are anhydrous or at least dried before being used for preparing the curable composition. The preparation is typically performed under protective environment, using an inert gas such as nitrogen. Preferably, components C1 and C2 are prepared and stored in separate containers sealed against humidity.

The two-component polyurethane adhesive composition of the present disclosure cures upon mixing of components C1 and C2. The amount of component C2 to be mixed with component C1 is selected preferably such that the ratio of the isocyanate groups in component C2 to the groups reactive to isocyanate groups in component C1 is in the range comprised between 0.8 and 1.2, between 0.9 and 1.1, or even about 1. The mixing operation may be performed by static or dynamic mixers.

The weight mixing ratio of the first component C1 to the second component C2 is typically ranges from 1:1 to 10:1, from 1.5:1 to 8:1, from 1.5:1 to 6:1, or even from 2:1 to 5:1.

According to an advantageous aspect, the curable composition according to the present disclosure has an open time of above 5 minutes, above 10 minutes, above 15 minutes, or even above 20 minutes, when measured at 20°C and a relative humidity of 65% according to the test method described in the experimental section.

The relatively long open time provided by the curable two-component polyurethane adhesive composition of the present disclosure makes it particularly suitable for the manufacture of sandwich panels. Long open time allows higher error tolerance and increased flexibility in sandwich panels production operations. This is particularly advantageous when producing sandwich panels involving relatively large parts.

According to another advantageous aspect, the curable composition according to the present disclosure has a press time of less than 20 minutes, less than 15 minutes, less than 12 minutes, less than 10 minutes, or even less than 8 minutes, when measured at 40°C according to the test method described in the experimental section. The press time is a well known parameter in the field of sandwich panel manufacturing, and is meant to refer to the time needed for the curable adhesive composition to polymerize during the heat-pressing operation. In the context of the present disclosure, the press time is measured according to the test method described in the experimental section. A minimal press time is highly favorable in sandwich panels' production operations as this allows faster and more cost-effective production.

According to still another advantageous aspect, the curable composition according to the present disclosure has a shelf life of more than 3 months, more than 6 months, or even more than 9 months, when determined after storage at 20°C and a relative humidity of 50% according to the test method described in the experimental section.

In another aspect, the present disclosure is directed to a method of manufacturing a sandwich panel comprising at least a core layer, at least a first structural panel and at least a second structural panel, wherein the method comprises the step of using a curable two-component polyurethane adhesive composition as described above.

According to a particular aspect, the method of manufacturing a sandwich panel comprises the steps of:
a) mixing the first component C1, the second component C2, and the polyurethane catalytic system, thereby forming a curable composition, wherein the polyurethane catalytic system is activated at temperatures above a threshold temperature;
b) applying the curable composition obtained in step a) on the first structural panel;
c) contacting the core layer with the curable composition applied on the first structural panel;
d) applying the curable composition obtained in step a) on the second structural panel;
e) contacting the core layer with the curable composition applied on the second structural panel, thereby forming a multilayer assembly; and
f) heating the multilayer assembly obtained in step e) at a temperature above the threshold temperature.

According to a preferred aspect of the method, the step of mixing the first component C1, the second component C2, and the polyurethane catalytic system, is performed immediately prior to the step of applying the curable composition obtained in step a) on the first structural panel.

In an exemplary aspect, the step of heating the multilayer assembly is performed, preferably by heat-pressing, at a temperature comprised between 30°C and 100°C, between 30°C and 80°C, between 30°C and 70°C, between 35°C and 60°C, between 35°C and 55°C, or even between 35°C and 50°C.

The method according to the present disclosure is suitable for manufacturing any sandwich panels commonly known in the art. Exemplary sandwich structures for use herein may be easily identified by those skilled in the art in the light of the present disclosure.

Suitable sandwich structures for use herein include, but are not limited to, those comprising a core layer selected from the group consisting of fibrous cores (such as e.g. inorganic or mineral wools), open and closed-cell-structured foams (such as e.g. polyvinylchloride, polyurethane, polyolefin, polystyrene, polyester or metal foams), expanded or extruded foams (such as e.g. polymer - polyurethane, epoxy, metal - aluminum foams), syntactic foams, solid cores (such as e.g. wood - balsa; polymer - epoxy cores), honeycomb structures (such as e.g. metal - aluminum, steel; Nomex - aramid fibre dipped in resin (epoxy, phenolic or polyamide) honeycomb structures), and any combinations thereof.

Exemplary (first and second) structural panels use herein include, but are not limited to, those comprising a material selected from the group consisting of FRP (fibre reinforced polymer - thermoplastic and thermoset), polymers, wood, aramid sheet, metals (such as e.g. aluminum, titanium, steel), ceramic, laminates of glass or carbon fiber-reinforced thermoplastics or thermoset polymers (such as e.g. unsaturated polyesters or epoxies), and any combinations thereof.

According to an advantageous aspect of the method of manufacturing a sandwich panel, the core layer is made from a material selected from the group consisting of mineral wool, in particular rock wool and glass wool; polyolefins; polyesters; polystyrenes; metals; wood; rubbers; nonwovens; and any combinations or mixtures thereof.

Advantageously, the core layer is a foam layer, in particular a polyethylene foam layer, a polyester foam layer or a polyurethane foam layer. Alternatively, the core layer comprises a honeycomb structure.

According to another advantageous aspect of the method of manufacturing a sandwich panel, the first structural panel and/or the second structural panel are made from a material selected from the group consisting of metals, in particular aluminum, aluminum alloys, stainless steel; wood; polyolefins; and any combinations or mixtures thereof.

According to another aspect, the present disclosure relates to a method of curing a curable composition, which comprises the steps of:
a) providing a two-component (heat-)curable composition comprising a first component C1 comprising at least one polyol, a second component C2 comprising at least one isocyanate; and optionally, a particulate filler material;
b) providing a (heat-activated) polyurethane catalytic system comprising a first bicyclic amine and a second bicyclic amine, wherein the polyurethane catalytic system is activated at temperatures above a threshold temperature; and
c) heating the curable composition at a temperature above the threshold temperature so as to effect its curing by activating the polyurethane catalytic system.

According to still another aspect, the present disclosure is directed to a sandwich panel comprising at least a core layer, at least a first structural panel and at least a second structural panel, and which further comprises a cured composition bonding the first structural panel to one side of the core layer and the second structural panel to the other side of the core layer, wherein the cured composition is obtained by mixing the first component C1, the second component C2 and the polyurethane catalytic system of a curable composition as described above, followed by heating the curable composition above the activating temperature of the polyurethane catalytic system.

According to an advantageous aspect of the sandwich panel, the core layer is made from a material selected from the group consisting of mineral wool, in particular rock wool and glass wool; polyolefins; polyesters; polystyrenes; metals; wood; rubbers; nonwovens; and any combinations thereof.

Advantageously, the core layer is a foam layer, in particular a polyethylene foam layer, a polyester foam layer or a polyurethane foam layer. Alternatively, the core layer comprises a honeycomb structure.

According to another advantageous aspect of the sandwich panel, the first structural panel and/or the second structural panel are made from a material selected from the group consisting of metals, in particular aluminum, aluminum alloys, stainless steel; wood; polyolefins; and any combinations or mixtures thereof.

In still another aspect of the present disclosure, it is provided a polyurethane catalytic system comprising a first bicyclic amine and a second bicyclic amine as described above. In a particular aspect, polyurethane catalytic system consists of a first bicyclic amine and a second bicyclic amine as described above.

The present disclosure is further directed to the use of a curable two-component polyurethane adhesive composition as described above for manufacturing a sandwich panel comprising at least a core layer, at least a first structural panel and at least a second structural panel.

In another aspect, the present disclosure is directed to the use of a combination of a first bicyclic amine and a second bicyclic amine as described above for preparing a curable polyurethane composition, in particular a curable two-component polyurethane adhesive composition.

In still another aspect, the present disclosure is directed to the use of a combination of a first bicyclic amine and a second bicyclic amine as described above, as a polyurethane catalytic system, in particular as a urethane-promoting catalytic system, more in particular as accelerators of the reaction of the isocyanate groups.

In yet another aspect, the present disclosure is directed to the use of a sandwich panel as described above for industrial applications, in particular for transportation market applications, in particular automotive and aerospace applications, or for construction market applications.

### EXAMPLES

The present disclosure is further illustrated by the following examples. These examples are merely for illustrative purposes only and are not meant to be limiting on the scope of the appended claims.

### Test methods and procedures:

### Open time

In a climatic room (20°C and 65% relative humidity), the curable two-component polyurethane adhesive composition sample is applied in multiple stripes with a regular syringe on a 100 mm x 100 mm stainless steel sheet having a thickness of 0.6mm and comprising a surface treatment providing a surface energy above 36 dynes per centimeter. The stripes have a length of about 100mm, a width of about 3mm and are separated each other by a 10mm gap. Directly after application, a stopwatch is started. A piece of Styrofoam™ (expanded polystyrene foam) available from The Dow Chemical Company and having the following dimension: 30mm x 50mm x 25mm, is placed on the substrate containing the stripes along the stripes longitudinal direction. A piece of expanded polystyrene foam is pressed against the substrate using gentle finger pressure every 30 seconds and the correct wetting of the Styrofoam™ piece is checked. Correct wetting of the expanded polystyrene foam piece by the adhesive sample is ensured when after pressing the polystyrene foam piece onto the sample stripes and immediate removal, transfer of the composition to the surface of the polystyrene foam piece does occur without stringing (no cording). The time at which the correct wetting of the polystyrene foam piece by the composition to the surface is not ensured anymore, is recorded. The composition sample is tested 3 times and the results are expressed in seconds and represent the average from the three measurements.

### Press time

In a climatic room (20°C and 65% relative humidity), the curable two-component polyurethane adhesive composition sample is applied on a 100 mm x 100 mm stainless steel sheet having a thickness of 0.6mm and comprising a surface treatment providing a surface energy above 36 dynes/ per centimeter. The sample composition is applied in nine stripes using a regular syringe and along the entire length of the substrate. The stripes have a length of about 100mm, a width of about 3mm and are separated each other by a gap of about 10mm. A core layer of extruded polystyrene (XPS) available from The Dow Chemical Company under the tradename Styrofoam™ and having the following dimension: 10cm x 10cm and 10cm thickness, is placed onto the stainless steel sheet containing the stripes and pressed using manual pressure. A second similar surface treated stainless steel sheet (dimension 10cm x 10cm and 1cm thickness) is prepared using the exact same procedure as described above and using the same exact amount of curable two-component polyurethane adhesive composition. The second surface treated stainless steel sheet so prepared is placed flush onto the exposed surface of the core layer of extruded polystyrene (XPS) and pressed using manual pressure thereby obtaining a test sandwich panel. The test sandwich panel is then placed and pressed in an automatic press (Fontijne LabEcon series 300, commercially available from Fontijne Grotnes) at 40°C and using a pressure of 10 kN. At the same time, a stopwatch is started. The pressed sample is removed from the automatic press checked every 30 seconds and the failure mode is checked. The press time is considered sufficient and the failure mode correct when superficial tearing is observed within the core layer (as opposed to adhesive failure at the interface between the core layer and the flat board substrate) after opening the pressed test sandwich panel by pulling one of the external flat board substrates using manual force. The time at which the correct failure is observed is recorded. The sample composition is tested 3 times and the results are expressed in seconds and represent the average from the three measurements.

### Shelf life

Shelf life of the curable compositions according to the present disclosure is determined upon storage at ambient conditions (20°C and 50% relative humidity) according to the following criteria: visual aspect, reactivity and viscosity after mixing are checked, and should remain unchanged.

### Materials employed:

**VORANOL RN 490:** Polyether polyol, commercially available from The Dow Chemical Company, USA.

**CASTOR OIL FSG:** Polyester polyol, commercially available from Loiret Haetjens, France.

**HOLCOFLEX black 216D:** Pigment, commercially available from Holcoflex, The Netherlands.

**ANTI-TERRA U:** Dispersing agent, commercially available from Byk Additives, Germany.

**BYK 9076:** Dispersing agent, commercially available from Byk Additives, Germany. **BENTONE 38:** Rheology modifier, commercially available from Elementis plc, UK **CALCIT MX20:** calcium carbonate filler, commercially available from SH minerals GmbH, Germany.

**OMYA BLH:** calcium carbonate filler, commercially available from Omya, France. **EXXSOL D80:** hydrocarbon solvent, commercially available from Exxonmobil, France. **CATALYST A-33:** polyurethane catalyst based on 1,4-diazabicyclo[2.2.2]octane, commercially available from Momentive, USA.

**TIB KAT 318:** tin-based polyurethane catalyst, commercially available from TIB Chemicals, Germany.

**TIB KAT 716:** bismuth-based polyurethane catalyst, commercially available from TIB Chemicals, Germany.

**ALCHEM DBU:** polyurethane catalyst based on 1,8-diazabicyclo[5.4.0]undec-7-ene, commercially available from Air Products, France.

**DABCO 8154:** polyurethane catalyst based on 1,4-diazabicyclo[2.2.2]octane, commercially available from Air Products, France.

**VORAMER MN 2115:** polymeric MDI, commercially available from The Dow Company, USA.

### Preparation of the two part polyurethane adhesive compositions:

The two part polyurethane adhesive compositions of example 1 and of comparative examples C-1 to C-3 are prepared according to the general procedure as outlined for example 1:

### Preparation of the first component C1 (Polyol):

Component C1 is prepared by mixing both polyols, pigment, dispersing agents in a mixer (Dispermat VE10M with additional Teflon blade and dispersing plate) at 800 rpm during 15 min. The filler material is then added and mixed at 1000 rpm during at least 2 hours. When the temperature is below 45°C, the solvent and the catalytic system is finally added, and the mixing is maintained during 30 min.

### Second component C2 (MDI isocyanate):

Polymeric MDI is used as purchased from The Dow Company under tradename VORAMER MN 2115.

### Mixing of Component C1 and Component C2:

Mixing of parts C1 and C2 is realized by manual mixing. Component C1 and component C2 are mixed according to a weight mixing ratio of the first component C1 to the second component C2 of 100/25 (or 4:1).

### Examples:

### Example 1 and comparative examples C-1 to C-3

In example 1, a curable two-component polyurethane adhesive composition is prepared by mixing components C1 and C2, wherein component C1 comprises a polyurethane catalytic system according to the present disclosure, i.e. comprising a first bicyclic amine (DBU) and a second bicyclic amine (DABCO). Comparative example C-1 is prepared by mixing components C1 and C2, wherein component C1 comprises a polyurethane catalytic system not according to the present disclosure, i.e. comprising only one bicyclic amine (DABCO). Comparative example C-2 is prepared by mixing components C1 and C2, wherein component C1 comprises a polyurethane catalytic system not according to the present disclosure, i.e. comprising one bicyclic amine (DABCO) and a tin-based polyurethane catalyst. Comparative example C-3 is prepared by mixing components C1 and C2, wherein component C1 comprises a polyurethane catalytic system not according to the present disclosure, i.e. comprising one bicyclic amine (DABCO) and a bismuth-based polyurethane catalyst. The ingredients and their amounts in the C1 and C2 components are indicated in Tables 1 and 2. Curable compositions are prepared by manually mixing the respective C1 and C2 components in a disposable cup. Extrusion, curing and examination of the samples are done according to the general procedures given above. Test results are shown in Table 3.

**Table 1: Composition of Component C1.**

| Ingredients (% by weight) | C1-1 | C1-2 | C1-3 | C1-4 |
|---|---|---|---|---|
| VORANOL RN 490 | 8.53 | 8.55 | 14.56 | 12.67 |
| CASTOR OIL FSG | 17.46 | 17.50 | 27.97 | 27.07 |
| HOLCOFLEX 216D | - | | 0.50 | 0.12 |
| ANTI-TERRA U | 0.56 | 0.56 | 1.12 | 1.02 |
| BYK 9076 | 1.95 | 1.96 | 0.20 | |
| BENTONE 38 | - | | 0.66 | 0.61 |
| CALCIT MX 20 | - | | 52.50 | 50.37 |
| OMYA BLH D32 | 68.53 | 68.69 | | |
| EXXSOL D80 | 2.18 | 2.19 | 1.50 | 7.63 |
| CATALYST A-33 | | | 0.20 | 0.10 |
| TIB KAT 318 | | | 0.13 | |
| TIB KAT 716 | | | | 0.47 |
| ALCHEM DBU | 0.49 | 0.55 | | |
| DABCO 8154 | 0.29 | | | |
| WATER | | | 0.65 | |
| Total | 100 | 100 | 100 | 100 |

**Table 2: Composition of Component C2.**

| Ingredients (in % by weight) | B |
|---|---|
| VORAMER MN 2115 | 100 |
| TOTAL | 100 |

**Table 3: Properties of the cured polyurethane adhesive compositions.**

| Test | Ex 1 (C1-1/C2) | C-1 (C1-2/C2) | C-2 (C1-3/C2) | C-3 (C1-4/C2) |
|---|---|---|---|---|
| Open time (seconds at 20°C and 65% relative humidity) * | 1200 | 570 | 180 | 570 |
| Press time (seconds at 40°C)* | 240 | 225 | 240 | 465 |
| Shelf life (months) | >9 | >9 | 6 | 3 |

| | | | | |
|---|---|---|---|---|
| Note: (*) Measured as described in the Test Method section. | | | | |

## Claims

1. A curable two-component polyurethane adhesive composition comprising:
a) a first component C1 comprising at least one polyol;
b) a second component C2 comprising at least one isocyanate;
c) a polyurethane catalytic system comprising a first bicyclic amine and a second bicyclic amine; and
d) a particulate filler material;
wherein the total amount of polyurethane catalytic system in component C1 or in component C2 is comprised between 0.2 wt.% and 1.0 wt.%, based on the total weight of component C1 or component C2, wherein the total amount of particulate filler material in component C1 or in component C2 is above 40 wt%, based on the total weight of component C1 or component C2, wherein the particulate filler material is selected from the group consisting of calcium carbonates having an average particle size of above 5 µm when measured by gravitational technique according to ISO 13371-3:2001, and wherein the curable two-component polyurethane adhesive composition is free of polyurethane metal catalysts.

2. A curable composition according to claim 1, wherein at least one of the first bicyclic amine or the second bicyclic amine is a bicyclic tertiary amine.

3. A curable composition according to any of claim 1 or 2, wherein at least one of the first bicyclic amine or the second bicyclic amine is selected from the group consisting of aza bicyclic amines, aza bicyclic tertiary amines, diaza bicyclic amines and diaza bicyclic tertiary amines.

4. A curable composition according to any of the preceding claims, wherein the first bicyclic amine and the second bicyclic amine are selected from the group consisting of 1-azabicyclo[2.2.2]octane; 8-azabicyclo[3.2.1]octane; N-methyl-8-azabicyclo[3.2.1]octane; 1,4-diazabicyclo[2.2.2]octane; 1,8-diazabicyclo[5.4.0]undec-7-ene; 1,5-diazabicyclo[5.4.0]undec-5-ene; 1,5-diazabicyclo[4.3.0]non-5-ene; 3,8-diazabicyclo[3.2.1]octane; 1,4-diazabicyclo[3.2.2]nonane; 3,9-diazabicyclo[3.3.1]non-1-ene; 7,9-diazabicyclo[4.2.2]decane; 1,4-diazabicyclo-[4.4.0]decane; and any combinations thereof.

5. A curable composition according to any of the preceding claims, wherein at least one of the first bicyclic amine or the second bicyclic amine is a diaza bicyclic tertiary amine.

6. A curable composition according to claim 5, wherein the diaza bicyclic tertiary amine is selected from the group consisting of 1,4-diazabicyclo[2.2.2]octane; 1,8-diazabicyclo[5.4.0]undec-7-ene; 1,5-diazabicyclo[5.4.0]undec-5-ene; 1,5-diazabicyclo[4.3.0]non-5-ene; 1,4-diazabicyclo[3.2.2]nonane; 1,4-diazabicyclo-[4.4.0]decane; and any combinations thereof.

7. A curable composition according to any of claim 5 or 6, wherein the diaza bicyclic tertiary amine is selected from the group consisting of 1,4-diazabicyclo[2.2.2]octane; 1,8-diazabicyclo[5.4.0]undec-7-ene; and any combinations thereof.

8. A curable composition according to any of the preceding claims, wherein the first bicyclic amine is selected to be 1,8-diazabicyclo[5.4.0]undec-7-ene and the second bicyclic amine is selected to be 1,4-diazabicyclo[2.2.2]octane.

9. A curable composition according to any of the preceding claims, wherein the total amount of polyurethane catalytic system in component C1 or in component C2 is comprised between 0.3 wt.% and 1.0 wt.%, between 0.5 wt.% and 1.0 wt.%, or even between 0.6 wt.% and 1.0 wt.%, based on the total weight of component C1 or component C2.

10. A curable composition according to any of the preceding claims, wherein the polyurethane catalytic system is comprised in component C1.

11. A curable composition according to any of the preceding claims, wherein the total amount of particulate filler material in component C1 or in component C2 is above 45 wt%, based on the total weight of component C1 or component C2.

12. A curable composition according to any of the preceding claims, wherein the particulate filler material is selected from the group consisting of ground calcium carbonates treated with fatty acids or fatty esters.

13. A method of manufacturing a sandwich panel comprising at least a core layer, at least a first structural panel and at least a second structural panel, wherein the method comprises the step of using a curable composition according to any of the preceding claims, and wherein the method comprises the steps of:
a) mixing the first component C1, the second component C2, and the polyurethane catalytic system, thereby forming a curable composition, wherein the polyurethane catalytic system is activated at temperatures above a threshold temperature;
b) applying the curable composition obtained in step a) on the first structural panel;
c) contacting the core layer with the curable composition applied on the first structural panel;
d) applying the curable composition obtained in step a) on the second structural panel;
e) contacting the core layer with the curable composition applied on the second structural panel, thereby forming a multilayer assembly; and
f) heating the multilayer assembly obtained in step e) at a temperature above the threshold temperature.

14. A sandwich panel comprising at least a core layer, at least a first structural panel and at least a second structural panel, and which further comprises a cured composition bonding the first structural panel to one side of the core layer and the second structural panel to the other side if the core layer, wherein the cured composition is obtained by mixing the first component C1, the second component C2 and the polyurethane catalytic system of a curable composition as described in any of claims 1 to 12, followed by heating the curable composition above the activating temperature of the polyurethane catalytic system.

15. Use of a curable composition according to any of claims 1 to 12 for manufacturing a sandwich panel comprising at least a core layer, at least a first structural panel and at least a second structural panel.

## Patentansprüche

1. Eine härtbare Zweikomponenten-Polyurethan-Klebstoffzusammensetzung, umfassend:
a) einen ersten Bestandteil C1, der mindestens ein Polyol umfasst;
b) einen zweiten Bestandteil C2, der mindestens ein Isocyanat umfasst;
c) ein katalytisches Polyurethansystem, das ein erstes bicyclisches Amin und ein zweites bicyclisches Amin umfasst; und
d) ein teilchenförmiges Füllstoffmaterial;
wobei die Gesamtmenge an katalytischem Polyurethansystem in Komponente C1 oder in Komponente C2, bezogen auf das Gesamtgewicht von Komponente C1 oder Komponente C2, zu zwischen 0,2 Gew.-% und 1,0 Gew.-% enthalten ist, wobei die Gesamtmenge an teilchenförmigem Füllstoffmaterial in Komponente C1 oder in Komponente C2, bezogen auf das Gesamtgewicht von Komponente C1 oder Komponente C2, bei über 40 Gew.-% liegt, wobei das teilchenförmige Füllstoffmaterial ausgewählt ist aus der Gruppe bestehend aus Calciumcarbonaten mit einer durchschnittlichen Teilchengröße von über 5 µm, wenn durch Gravitationstechnik gemäß ISO 13371-3:2001 gemessen wird, und wobei die härtbare Zweikomponenten-Polyurethan-Klebstoffzusammensetzung frei von Polyurethan-Metallkatalysatoren ist.

2. Eine härtbare Zusammensetzung nach Anspruch 1, wobei mindestens eines von dem ersten bicyclischen Amin oder dem zweiten bicyclischen Amin ein bicyclisches tertiäres Amin ist.

3. Eine härtbare Zusammensetzung nach einem von Anspruch 1 oder 2, wobei mindestens eines von dem ersten bicyclischen Amin oder dem zweiten bicyclischen Amin ausgewählt ist aus der Gruppe bestehend aus aza-bicyclischen Aminen, aza-bicyclischen tertiären Aminen, diaza-bicyclischen Aminen und diaza-bicyclischen tertiären Aminen.

4. Eine härtbare Zusammensetzung nach einem der vorstehenden Ansprüche, wobei das erste bicyclische Amin und das zweite bicyclische Amin ausgewählt sind aus der Gruppe bestehend aus 1-Azabicyclo[2.2.2]octan; 8-Azabicyclo[3.2.1]octan; N-Methyl-8-azabicyclo[3.2.1]octan; 1,4-Diazabicyclo[2.2.2]octan; 1,8-Diazabicyclo[5.4.0]undec-7-en; 1,5-Diazabicyclo[5.4.0]undec-5-en; 1,5-Diazabicyclo[4.3.0]non-5-en; 3,8-Diazabicyclo[3.2.1]octan; 1,4-Diazabicyclo[3.2.2]nonan; 3,9-Diazabicyclo[3.3.1]non-1-en; 7,9-Diazabicyclo[4.2.2]decan; 1,4-Diazabicyclo-[4.4.0]decan; und jeder Kombinationen davon.

5. Eine härtbare Zusammensetzung nach einem der vorstehenden Ansprüche, wobei mindestens eines von dem ersten bicyclischen Amin oder dem zweiten bicyclischen Amin ein diaza-bicyclisches tertiäres Amin ist.

6. Eine härtbare Zusammensetzung nach Anspruch 5, wobei das diaza-bicyclische tertiäre Amin ausgewählt ist aus der Gruppe bestehend aus 1,4-Diazabicyclo[2.2.2]octan; 1,8-Diazabicyclo[5.4.0]undec-7-en; 1,5-Diazabicyclo[5.4.0]undec-5-en; 1,5-Diazabicyclo[4.3.0]non-5-en; 1,4-Diazabicyclo[3.2.2]nonan; 1,4-Diazabicyclo-[4.4.0]decan; und jeder Kombinationen davon.

7. Eine härtbare Zusammensetzung nach einem der Ansprüche 5 oder 6, wobei das diaza-bicyclische tertiäre Amin ausgewählt ist aus der Gruppe bestehend aus 1,4-Diazabicyclo[2.2.2]octan; 1,8-Diazabicyclo[5.4.0]undec-7-en; und jeder Kombinationen davon.

8. Eine härtbare Zusammensetzung nach einem der vorstehenden Ansprüche, wobei das erste bicyclische Amin so ausgewählt ist, dass es 1,8-Diazabicyclo[5.4.0]undec-7-en ist und das zweite bicyclische Amin so ausgewählt ist, dass es 1,4-Diazabicyclo[2.2.2]octan ist.

9. Eine härtbare Zusammensetzung nach einem der vorstehenden Ansprüche, wobei die Gesamtmenge an katalytischem Polyurethansystem in Komponente C1 oder in Komponente C2, bezogen auf das Gesamtgewicht von Komponente C1 oder Komponente C2, zu zwischen 0,3 Gew.-% und 1,0 Gew.-%, zwischen 0,5 Gew.-% und 1,0 Gew.-% oder sogar zwischen 0,6 Gew.-% und 1,0 Gew.-% enthalten ist.

10. Eine härtbare Zusammensetzung nach einem der vorstehenden Ansprüche, wobei das katalytische Polyurethansystem in Komponente C1 enthalten ist.

11. Eine härtbare Zusammensetzung nach einem der vorstehenden Ansprüche, wobei die Gesamtmenge an teilchenförmigem Füllstoffmaterial in Komponente C1 oder in Komponente C2, bezogen auf das Gesamtgewicht von Komponente C1 oder Komponente C2, bei über 45 Gew.-% liegt.

12. Eine härtbare Zusammensetzung nach einem der vorstehenden Ansprüche, wobei das teilchenförmige Füllstoffmaterial ausgewählt ist aus der Gruppe bestehend aus gemahlenen Calciumcarbonaten, die mit Fettsäuren oder Fettsäureestern behandelt sind.

13. Ein Verfahren zum Herstellen einer Sandwichplatte, umfassend mindestens eine Kernschicht, mindestens eine erste Strukturplatte und mindestens eine zweite Strukturplatte, wobei das Verfahren den Schritt des Verwendens einer härtbaren Zusammensetzung nach einem der vorstehenden Ansprüche umfasst und wobei das Verfahren die Schritte umfasst des:
a) Mischens der ersten Komponente C1, der zweiten Komponente C2 und des katalytischen Polyurethansystems, wodurch eine härtbare Zusammensetzung gebildet wird, wobei das katalytische Polyurethansystem bei Temperaturen über einer Schwellenwerttemperatur aktiviert wird;
b) Auftragens der in Schritt a) erhaltenen härtbaren Zusammensetzung auf die erste Strukturplatte;
c) Inkontaktbringens der Kernschicht mit der härtbaren Zusammensetzung, die auf der ersten Strukturplatte aufgetragen ist;
d) Auftragens der in Schritt a) erhaltenen härtbaren Zusammensetzung auf die zweite Strukturplatte;
e) Inkontaktbringens der Kernschicht mit der härtbaren Zusammensetzung, die auf der zweiten Strukturplatte aufgetragen ist, wodurch eine mehrschichtige Baugruppe gebildet wird; und
f) Erwärmens der in Schritt e) erhaltenen mehrschichtigen Baugruppe bei einer Temperatur über der Schwellenwerttemperatur.

14. Eine Sandwichplatte, umfassend mindestens eine Kernschicht, mindestens eine erste Strukturplatte und mindestens eine zweite Strukturplatte, und die ferner eine gehärtete Zusammensetzung umfasst, die die erste Strukturplatte an eine Seite der Kernschicht und die zweite Strukturplatte an die andere Seite wenn die Kernschicht bindet, wobei die gehärtete Zusammensetzung erhalten wird durch Mischen der ersten Komponente C1, der zweiten Komponente C2 und des katalytischen Polyurethansystems einer härtbaren Zusammensetzung, wie in einem der Ansprüche 1 bis 12 beschrieben, gefolgt von Erwärmen der härtbaren Zusammensetzung über die Aktivierungstemperatur des katalytischen Polyurethansystems.

15. Verwendung einer härtbaren Zusammensetzung nach einem der Ansprüche 1 bis 12 zum Herstellen einer Sandwichplatte, die mindestens eine Kernschicht, mindestens eine erste Strukturplatte und mindestens eine zweite Strukturplatte umfasst.

## Revendications

1. Composition adhésive durcissable de polyuréthane à deux composants comprenant :
a) un premier composant C1 comprenant au moins un polyol ;
b) un deuxième composant C2 comprenant au moins un isocyanate ;
c) un système catalytique de polyuréthane comprenant une première amine bicyclique et une deuxième amine bicyclique ; et
d) un matériau de charge particulaire ;
dans laquelle la quantité totale de système catalytique de polyuréthane dans le composant C1 ou dans le composant C2 est comprise entre 0,2 % en poids et 1,0 % en poids, sur la base du poids total de composant C1 ou de composant C2, dans laquelle la quantité totale de matériau de charge particulaire dans le composant C1 ou dans le composant C2 est supérieure à 40 % en poids, sur la base du poids total de composant C1 ou de composant C2, dans laquelle le matériau de charge particulaire est choisi dans le groupe constitué de carbonate de calcium ayant une taille moyenne de particules supérieure à 5 µm lorsqu'on mesure par technique gravitationnelle selon ISO 13371-3:2001, et dans laquelle la composition adhésive durcissable de polyuréthane à deux composants est exempte de catalyseurs métalliques de polyuréthane.

2. Composition durcissable selon la revendication 1, dans laquelle au moins l'une parmi la première amine bicyclique ou la deuxième amine bicyclique est une amine tertiaire bicyclique.

3. Composition durcissable selon l'une quelconque des revendications 1 ou 2, dans laquelle au moins l'une parmi la première amine bicyclique ou la deuxième amine bicyclique est choisie dans le groupe constitué d'amines aza-bicycliques, amines tertiaires aza-bicycliques, amines diaza-bicycliques et amines tertiaires diazas-bicycliques.

4. Composition durcissable selon l'une quelconque des revendications précédentes, dans laquelle la première amine bicyclique et la deuxième amine bicyclique sont choisies dans le groupe constitué de 1-azabicyclo[2.2.2]octane ; 8-azabicyclo[3.2.1]octane ; N-méthyl-8-azabicyclo[3.2.1]octane ; 1,4-diazabicyclo[2.2.2]octane ; 1,8-diazabicyclo[5.4.0]undéc-7-ène ; 1,5-diazabicyclo[5.4.0]undéc-5-ène ; 1,5-diazabicyclo[4.3.0]non-5-ène ; 3,8-diazabicyclo[3.2.1]octane ; 1,4-diazabicyclo[3.2.2]nonane ; 3,9-diazabicyclo[3.3.1]non-1-ène ; 7,9-diazabicyclo[4.2.2]décane ; 1,4-diazabicyclo-[4.4.0]décane ; et n'importe quelles combinaisons de ceux-ci.

5. Composition durcissable selon l'une quelconque des revendications précédentes, dans laquelle au moins l'une parmi la première amine bicyclique ou la deuxième amine bicyclique est une amine tertiaire diaza-bicyclique.

6. Composition durcissable selon la revendication 5, dans laquelle l'amine tertiaire diaza-bicyclique est choisie dans le groupe constitué de 1,4-diazabicyclo[2.2.2]octane ; 1,8-diazabicyclo[5.4.0]undéc-7-ène ; 1,5-diazabicyclo[5.4.0]undéc-5-ène ; 1,5-diazabicyclo[4.3.0]non-5-ène ; 1,4-diazabicyclo[3.2.2]nonane ; 1,4-diazabicyclo-[4.4.0]décane ; et n'importe quelles combinaisons de ceux-ci.

7. Composition durcissable selon l'une quelconque des revendications 5 ou 6, dans laquelle l'amine tertiaire diaza-bicyclique est choisie dans le groupe constitué de 1,4-diazabicyclo[2.2.2]octane ; 1,8-diazabicyclo[5.4.0]undéc-7-ène ; et n'importe quelles combinaisons de ceux-ci.

8. Composition durcissable selon l'une quelconque des revendications précédentes, dans laquelle la première amine bicyclique est choisie pour être 1,8-diazabicyclo[5.4.0]undéc-7-ène et la deuxième amine bicyclique est choisie pour être 1,4-diazabicyclo[2.2.2]octane.

9. Composition durcissable selon l'une quelconque des revendications précédentes, dans laquelle la quantité totale de système catalytique de polyuréthane dans le composant C1 ou dans le composant C2 est comprise entre 0,3 % en poids et 1,0 % en poids, entre 0,5 % en poids et 1,0 % en poids, ou même entre 0,6 % en poids et 1,0 % en poids, sur la base du poids total de composant C1 ou de composant C2.

10. Composition durcissable selon l'une quelconque des revendications précédentes, dans laquelle le système catalytique de polyuréthane est compris dans le composant C1.

11. Composition durcissable selon l'une quelconque des revendications précédentes, dans laquelle la quantité totale de matériau de charge particulaire dans le composant C1 ou dans le composant C2 est supérieure à 45 % en poids, sur la base du poids total de composant C1 ou de composant C2.

12. Composition durcissable selon l'une quelconque des revendications précédentes, dans laquelle le matériau de charge particulaire est choisi dans le groupe constitué de carbonate de calcium concassé traité avec des acides gras ou des esters gras.

13. Procédé de fabrication d'un panneau sandwich comprenant au moins une couche d'âme, au moins un premier panneau structural et au moins un deuxième panneau structural, dans lequel le procédé comprend l'étape d'utilisation d'une composition durcissable selon l'une quelconque des revendications précédentes, et dans lequel le procédé comprend les étapes consistant à :
a) mélanger le premier composant C1, le deuxième composant C2, et le système catalytique de polyuréthane, en formant de ce fait une composition durcissable, dans lequel le système catalytique de polyuréthane est activé à des températures supérieures à une température seuil ;
b) appliquer la composition durcissable obtenue à l'étape a) sur le premier panneau structural ;
c) mettre en contact la couche d'âme avec la composition durcissable appliquée sur le premier panneau structural ;
d) appliquer la composition durcissable obtenue à l'étape a) sur le deuxième panneau structural ;
e) mettre en contact la couche d'âme avec la composition durcissable appliquée sur le deuxième panneau structural, ce qui forme un ensemble multicouche ; et
f) chauffer l'ensemble multicouche obtenu à l'étape e) à une température supérieure à la température seuil.

14. Panneau sandwich comprenant au moins une couche d'âme, au moins un premier panneau structural et au moins un deuxième panneau structural, et qui comprend en outre une composition durcie liant le premier panneau structural à un côté de la couche d'âme et le deuxième panneau structural à l'autre côté de la couche d'âme, dans lequel la composition durcie est obtenue en mélangeant le premier composant C1, le deuxième composant C2 et le système catalytique de polyuréthane d'une composition durcissable telle que décrite dans l'une quelconque des revendications 1 à 12, suivi par un chauffage de la composition durcissable au-dessus de la température d'activation du système catalytique de polyuréthane.

15. Utilisation d'une composition durcissable selon l'une quelconque des revendications 1 à 12 pour la fabrication d'un panneau sandwich comprenant au moins une couche d'âme, au moins un premier panneau structural et au moins un deuxième panneau structural.
